# EUROPEAN PATENT SPECIFICATION

(11) **EP 0 386 981 B1**
(45) Date of publication and mention of the grant of the patent: **07.02.1996**
(21) Application number: 90302327.3
(22) Date of filing: 05.03.1990
(51) Int. Cl.: H04H 1/02, H04N 7/10

(54) **Coaxial networks**
Koaxialkabelnetze
Réseaux à câble coaxial

(30) Priority: 07.03.1989 GB 8905178
(43) Date of publication of application: 12.09.1990
(73) Proprietor: THORN EMI plc, London W1A 2AY (GB)
(72) Inventor: Barnes, Peter, Swindon, Wiltshire, SN2 6NW (GB); Harvey, Arthur Soutar, Uxbridge, Middlesex, UB8 2JW (GB); James, Timothy Andrew, Harrow, Middlesex, HA1 4TJ (GB)
(74) Representative: Hurst, Richard Arthur Alexander

(56) References cited:
- EP-A- 0 290 023
- GB-A- 2 168 226
- US-A- 4 781 427

## Description

This invention relates to coaxial networks. Such networks are used, for example, in video signal distribution systems. In some circumstances, for example in a security system for an industrial premises, it would be useful to distribute video signals between a large number of video cameras located at different surveillance points and a selection from a number of video signal monitors. In such circumstances it would be useful to be able to use a relatively cheap component such as a passive star splitter to which cables from each video apparatus could be attached. Such a system suffers the disadvantage however that the concentration of many cables at the central point of the splitter may make installation of the system difficult.

It is an object of the present invention to provide a coaxial network which may be used in such a video signal distribution system wherein the above problem is avoided.

According to the present invention a coaxial network includes a central symmetrical bidirectional star splitter having a plurality of ports, and at least one asymmetrical bidirectional splitter, each port being either terminated or connected to a respective asymmetrical splitter, each asymmetrical splitter having a plurality of ports for connection to a plurality of signal sockets, each of the symmetrical and asymmetrical splitters being constructed in such manner that if a signal is applied to any of its ports this signal will be split between its other ports, so as to enable the interchange of signals between a number of electrical appliances connected to respective ones of the sockets.

It should be noted that US-A-4781427 discloses a fibre-optic network including a central symmetrical star splitter having a plurality of ports, and a respective asymmetrical splitter connected to each port. Each asymmetrical splitter splits only those signals which it receives from the central splitter, so that communication between its own ports has to occur via the central splitter. It should furthermore be noted that GB-A-2168226 discloses a hybrid cabled TV distribution system. Subscribers can control a switch at a star point to select channels, the switch controlling a superhet frequency converter which receives all the frequency division multiplexed channels, so that the converter converts a selected channel to a predetermined frequency which passes through a band pass filter to the subscriber.

One coaxial network in accordance with the invention will now be described by way of example only with reference to the accompanying figures in which:
Figure 1 is an overview of the network;
Figure 2 shows the symmetrical splitter incorporated in the network of Figure 1; and
Figure 3 shows one asymmetrical splitter incorporated in the network of Figure 1.

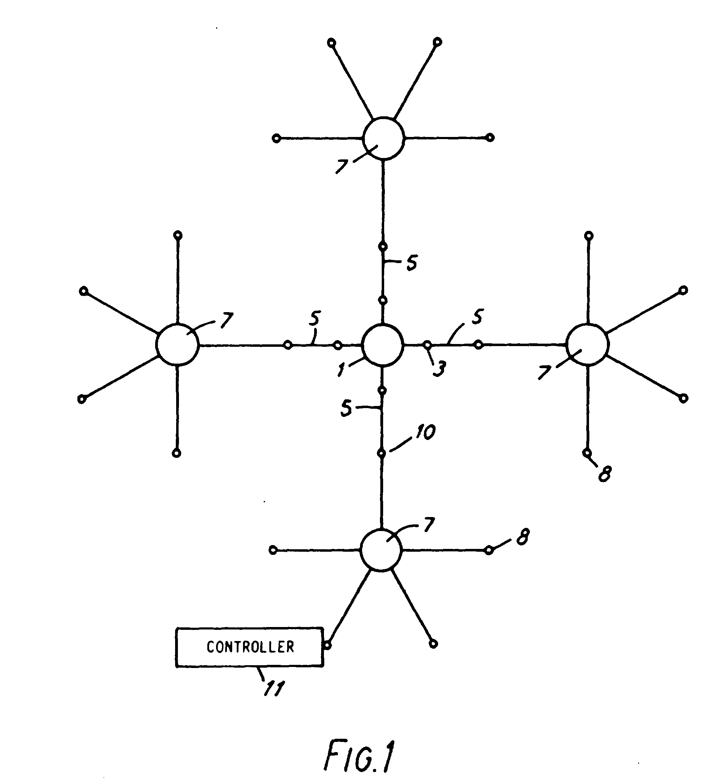

Referring firstly to Figure 1 the network includes a central symmetrical star splitter 1 having four ports 3. To each port is connected by a respective cable 5 an asymmetrical star splitter 7. Each asymmetrical splitter 7 has five ports, four of these ports 8 being for connection to a selection of video sockets via respective cables (not shown), with the fifth port 10 being connected to the symmetrical splitter 1. To one of the sockets there is connected a controller 11 which will be effective in the use of the system to allocate frequency channels to video appliances to be connected to the system as will be described in more detail hereafter.

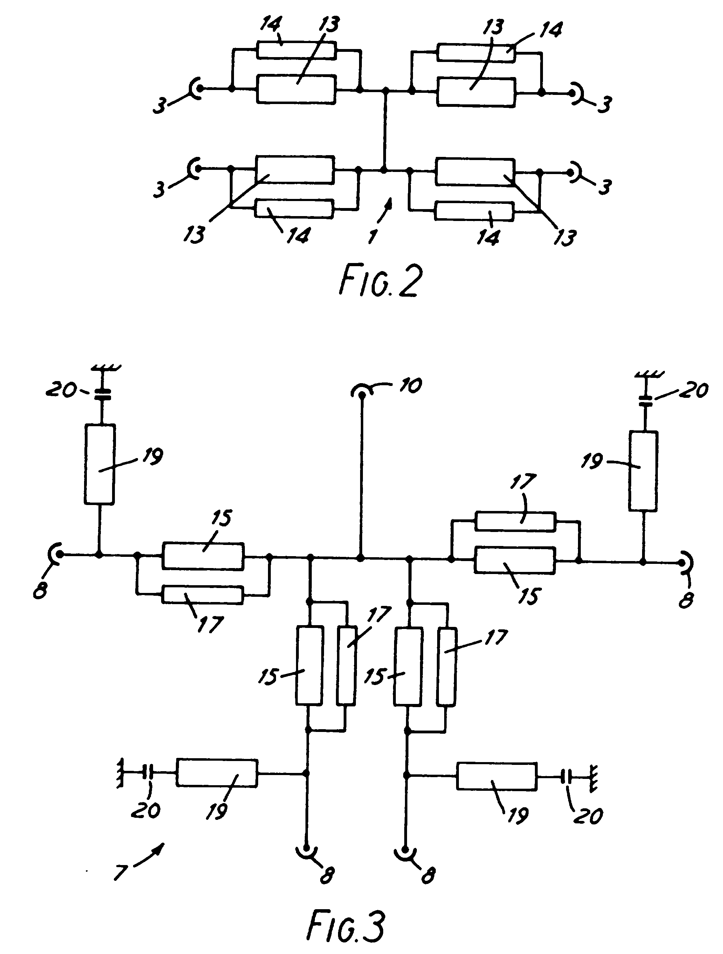

Referring now also to Figure 2 the central symmetrical splitter 1 comprises a simple resistive network. The splitter 1 includes four balanced resistors 13, one resistor being provided in respect of each port 3. Connected in parallel with each resistor 13 there is provided a respective bypass inductor 14. Whilst in the particular network being described each of the-ports 3 of the symmetrical splitter 1 is connected to a cable 5, in some circumstances not all the ports 3 will be connected to cables 5 in which case any unconnected port must be terminated by an appropriate terminating resistor.

Referring now also to Figure 3 the asymmetric splitters 7 also include a network of resistors, one resistor 15 being provided in respect of each port 8. These resistors 15 however are not balanced. Across each resistor 15 there is provided a bypass inductor 17. Each parallel arrangement of inductor 17 and resistor 15 is connected to a port 8 and also to earth by a respective series arrangements of a terminating resistor 19 and a DC isolation capacitor 20. The network is arranged such that the performance of each asymmetrical splitter 7 is insensitive to the number of sockets being used, terminated or left unused in an open circuit mode. This is very important as the network must not change in performance due to the number of sockets in use.

In use of the system various video appliances (not shown) are connected to the sockets, each appliance being either capable of receiving video signals in the case of a television monitor or injecting video signals into the network in the case of a surveillance video camera. The central controller 11 monitors the allocation of frequency channels within the network. Thus when an appliance requires a channel a signal is sent to the controller 11 requesting a free frequency channel, the controller 11 responding with a channel which the appliance can use. The controller will subsequently release the channel for use for a different service when the appliance is no longer using the channel. Communication between the controller and the appliance takes place via the cables and splitters 1, 7 using a signalling channel at a frequency below that of the TV spectrum, i.e. typically within the frequency spectrum between DC to about 1 MHz. The bypass inductors 14, 17 are effective to bypass these control channel signals in normal use of the network. When a video signal is inserted into the network using an allocated channel it is thus available at all outlets on the same frequency channel.

It will be appreciated that a minimum signal level must be provided at each video signal outlet to give a good quality video picture. To provide this minimum level all video signals must be transmitted at a higher signal level so as to overcome the attenuation inherent in the network. In the particular network described herebefore using cheap amplifiers it is found that a margin of 50 dB is available i.e. a network attenuation of 50 dB. This network loss can be used either to give large distances between video sockets or to enable a large number of video appliances to be connected to the network. It is found for example that a network having 24 video outlets can be built using a six way central splitter with four-way remote devices interconnected by 12.5 metre cables. This would give a distance of 50 metres across the network within the 50 dB attenuation budget.

It will be appreciated that the particular combination of a central symmetrical splitter coupled to a number of asymmetrical splitters gives minimum signal level imbalances across the network. There will however be some signal level imbalance inherent in the system as the port isolation cannot be made as high as the loss across the network, this generally being the maximum of 30 dB. This signal imbalance can produce problems in signal quality if the channels are close in frequency. This is unlikely to be a problem however in a surveillance system.

It will be appreciated whilst the network described herebefore is particularly designed for use as a surveillance system for an industrial premises, a network in accordance with the invention will also find application in other situations, for example in a domestic environment. Such a network in a domestic environment may be used to provide a video signal link between all the video appliances used in a domestic premises, for example video recorders, television, television aerials, and surveillance cameras.

It will also be appreciated that whilst the network described herebefore is designed for use in video signal distribution systems, a network in accordance with the invention also finds application in the distribution of other signals, for example audio signals, digital data signals and monitoring signals.

## Claims

1. A coaxial network including a central symmetrical star splitter (1) having a plurality of ports (3), and at least one asymmetrical splitter (7), each port being either terminated or connected to a respective asymmetrical splitter (7), each asymmetrical splitter (7) having a plurality of ports (8) for connection to a plurality of signal sockets, each of the symmetrical (1) and asymmetrical (7) splitters being constructed in such manner that if a signal is applied to any of its ports (3 or 8) this signal will be split between its other ports (3 or 8), so as to enable the interchange of signals between a number of electrical appliances connected to respective ones of the sockets.

2. A coaxial network according to Claim 1 in which the central splitter (1) comprises a resistive network (13).

3. A coaxial network according to either of the preceding claims in which each asymmetrical splitter comprises a resistive network (15, 19).

4. A coaxial network according to any of the preceding claims including a control means (11) for allocating channels of different frequencies to various ones of the appliances connected to the network.

5. A coaxial network according to Claim 4 in which the control means (11) is arranged to produce control signals at a frequency outside the frequency channels.

6. A coaxial network according to Claim 5 in which the control signals are of a lower frequency than the different frequencies, and including bypass means (14, 17) for avoiding attenuation of the control signals in the central (1) and asymmetrical (7) splitters.

## Patentansprüche

1. Koaxialkabelnetz mit einem zentralen symmetrischen Sternaufteiler (1), der eine Vielzahl von Anschlüssen (3) hat, und mit wenigstens einem asymmetrischen Aufteiler (7), wobei jeder Anschluß entweder abgeschlossen oder mit einem entsprechenden asymmetrischen Aufteiler (7) verbunden ist, wobei jeder asymmetrische Aufteiler (7) eine Vielzahl von Anschlüssen (8) zur Verbindung mit einer Vielzahl von Signalbuchsen hat, wobei der symmetrische (1) und die asymmetrischen (7) Aufteiler so ausgebildet sind, daß bei Zuführung eines Signals zu einem ihrer Anschlüsse (3 oder 8) das Signal zwischen ihren anderen Anschlüssen (3 oder 8) aufgeteilt wird, um so den Austausch von Signalen zwischen einer Anzahl von elektrischen Geräten zu ermöglichen, die mit entsprechenden Buchsen verbunden sind.

2. Koaxialkabelnetz nach Anspruch 1, bei dem der zentrale Aufteiler ein Widerstandsnetzwerk (13) umfaßt.

3. Koaxialkabelnetz nach einem der vorhergehenden Ansprüche, bei dem jeder asymmetrische Aufteiler ein Widerstands-Netzwerk (15, 19) umfaßt.

4. Koaxialkabelnetz nach einem der vorhergehenden Ansprüche mit Steuermitteln (11) zur Zuordnung von Kanälen mit unterschiedlichen Frequenzen zu verschiedenen mit dem Netzwerk verbundenen Geräten.

5. Koaxialkabelnetz nach Anspruch 4, bei dem die Steuermittel (11) so ausgebildet sind, daß sie Steuersignale mit einer Frequenz außerhalb der Frequenzkanäle erzeugen.

6. Koaxialkabelnetz nach Anspruch 5, bei dem die Steuersignale eine niedrigere Frequenz als die unterschiedlichen Frequenzen haben, und bei dem Bypass-Mittel (14, 17) vorgesehen sind, um eine Dämpfung der Steuersignale in dem zentralen (1) und in den asymmetrischen Aufteilern (7) zu vermeiden.

## Revendications

1. Réseau à câble coaxial incluant un répartiteur central symétrique en étoile (1) ayant une pluralité de ports (3), et au moins un répartiteur asymétrique (7), chaque port étant soit bouclé, soit connecté à un répartiteur asymétrique respectif (7), chaque répartiteur asymétrique (7) ayant une pluralité de ports (8) pour une connexion à une pluralité de prises de signaux, chacun des répartiteurs symétrique (1) et asymétrique(s) (7) étant construit de telle manière que si un signal est appliqué à l'un quelconque de ses ports (3 ou 8), ce signal sera réparti entre ses autres ports (3 ou 8), de façon à autoriser l'échange de signaux entre un certain nombre d'appareils électriques connectés à certaines respectives des prises.

2. Réseau à câble coaxial selon La revendication 1, dans lequel le répartiteur central (1) comprend un réseau résistif (13).

3. Réseau à câble coaxial selon l'une des deux revendications précédentes, dans lequel chaque répartiteur asymétrique comprend un réseau résistif (15, 19).

4. Réseau à câble coaxial selon l'une quelconque des revendications précédentes, incluant des moyens de commande (11) pour affecter des canaux de différentes fréquences à divers appareils parmi ceux connectés au réseau.

5. Réseau à câble coaxial selon la revendication 4, dans lequel les moyens de commande (11) sont agencés pour produire des signaux de commande à une fréquence se trouvant à l'extérieur des canaux de fréquence.

6. Réseau à câble coaxial selon la revendication 5, dans lequel les signaux de commande ont une fréquence inférieure aux différentes fréquences, et incluant des moyens en dérivation (14, 17) pour éviter une atténuation des signaux de commande dans les répartiteurs central (1) et asymétrique(s) (7).
